Europäisches Patentamt

European Patent Office

Office européen des brevets

(19)

(11) Publication number: **0 102 981**
**B1**

## (12) EUROPEAN PATENT SPECIFICATION

(45) Date of publication of patent specification: **08.06.88**

(21) Application number: **83900845.5**

(22) Date of filing: **22.02.83**

(86) International application number:
**PCT/GB83/00052**

(87) International publication number:
**WO 83/03015 01.09.83 Gazette 83/20**

(51) Int. Cl.⁴: **G 05 B 19/04**

(54) PROGRAMMABLE CONTROLLER.

(30) Priority: **27.02.82 GB 8205851**

(43) Date of publication of application:
**21.03.84 Bulletin 84/12**

(45) Publication of the grant of the patent:
**08.06.88 Bulletin 88/23**

(84) Designated Contracting States:
**DE FR**

(56) References cited:
**FR-A-2 189 943**

**Electrical Power Systems Technology (Fardo & Patrick) page 132.**

The file contains technical information submitted after the application was filed and not included in this specification

(73) Proprietor: **SQUARE D COMPANY**
**Executive Plaza**
**Palatine, IL 60067 (US)**

(72) Inventor: **CLARKE, Geoffrey**
**38 Sutton Park Blunsdon Nr. Swindon**
**Wiltshire (GB)**

(74) Representative: **Wotherspoon, Graham et al**
**FITZPATRICKS 4 West Regent Street**
**Glasgow G2 1RS Scotland (GB)**

Courier Press, Leamington Spa, England.

## Description

This invention relates to input/output arrangements for industrial programmable controllers.

It is well known to use programmable controllers for controling industrial electrical loads. Such controllers are normally based on computers, microprocessors, or solid-state logic which, in an industrial environment, must be protected from spurious operation caused by electrical noise and other false signals on the inputs and outputs produced for example by operation of machinery. It has hitherto been thought necessary to isolate the control system from the inputs and outputs by components such as transformers, optical couplers or relays.

An object of the present invention is to permit a programmable controller to operate satisfactorily with non-isolated inputs and outputs, thus removing the need for isolating components and significantly reducing complexity and cost.

Accordingly the present invention relates to a programmable control system for use with a mains power supply having line and neutral inputs; the system comprising at least one control input switch element, a digital logic system, and at least one control output switch element; the logic system including a power supply arranged to provide an internal voltage;
characterised in that:
the internal voltage is tied by a connection to the mains line input;
each control switching element is connected to the mains line input and via a series first impedance to the mains neutral input;
the condition of each control switching element is communicated to the logic system via a second impedance connected to the junction of the control switching element and the first impedance;
the second impedance is substantially greater than the first impedance; and
each control output comprises a solid-state switch and a coil connected in series across the main power supply, the solid-state switch being connected to the mains line input and the coil to the mains neutral input, the solid-state switch having a control electrode connected to the logic system.

Preferably, the second impedance is connected in series with rectifying means and filter means.

Embodiments of the invention will now be described by way of example only, with reference to the drawings, in which:

Fig. 1 illustrates certain basic features of a control system and the problem which the invention seeks to solve;

Fig. 2 shows the general architecture of a control system;

Fig. 3 shows an input circuit for use in a system having the architecture of Fig. 2 as part of a system embodying the present invention;

Fig. 4 shows an alternative input circuit; and

Fig. 5 shows an output circuit for use in a system having the architecture of Fig. 2 as part of a system embodying the present invention.

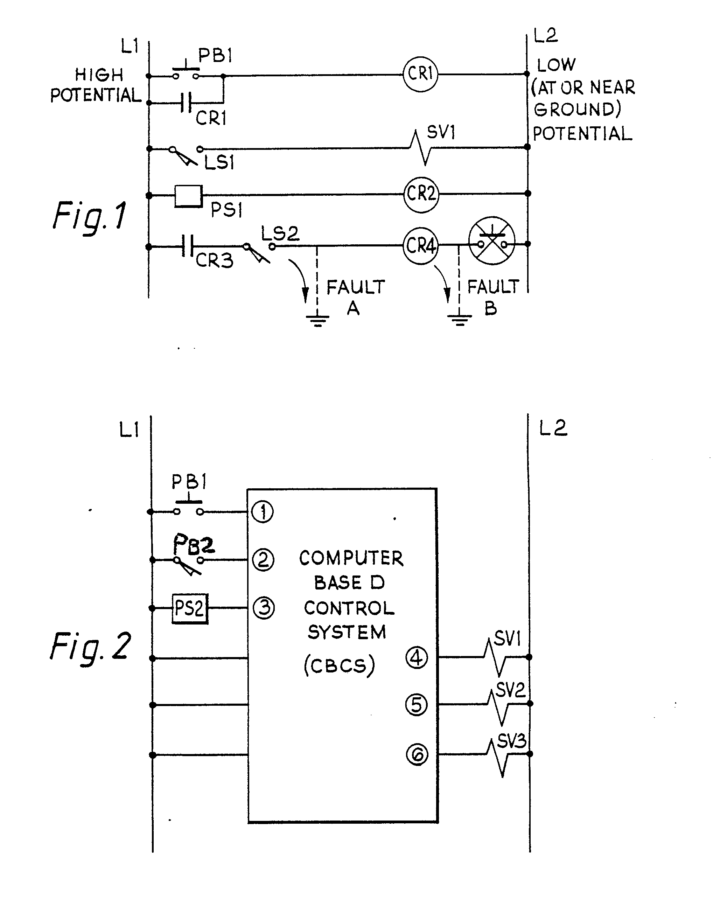

Figure 1 illustrates certain elementary criteria for a control system operating with main supply L1, L2. Sensing or control input devices such as pushbutton PB1, limit switch LS1, proximity switch PS1 are connected to the high potential (L1) side so that a ground fault on the external device wiring, while possibly destructive to the device, will not result in an initiating signal. Energisation and control of output devices such as motor starter coils and electro-magnetically operated hydraulic and pneumatic solenoid valves, as indicated at SV1, CR2, CR4, are controlled by contacts located in the high potential (L1) side so that a ground fault on the coil wiring does not cause erroneous energisation, as shown by "Fault A". If these output control contacts were located in the low potential (L2) side, a ground fault on the coil wiring would lead to inadvertent operation, as shown by "Fault B". Thus it will be seen that the input/output connections to a computer-based control system should be arranged as shown in Fig. 2, which shows three typical inputs 1, 2, 3 and three typical outputs 4, 5, 6.

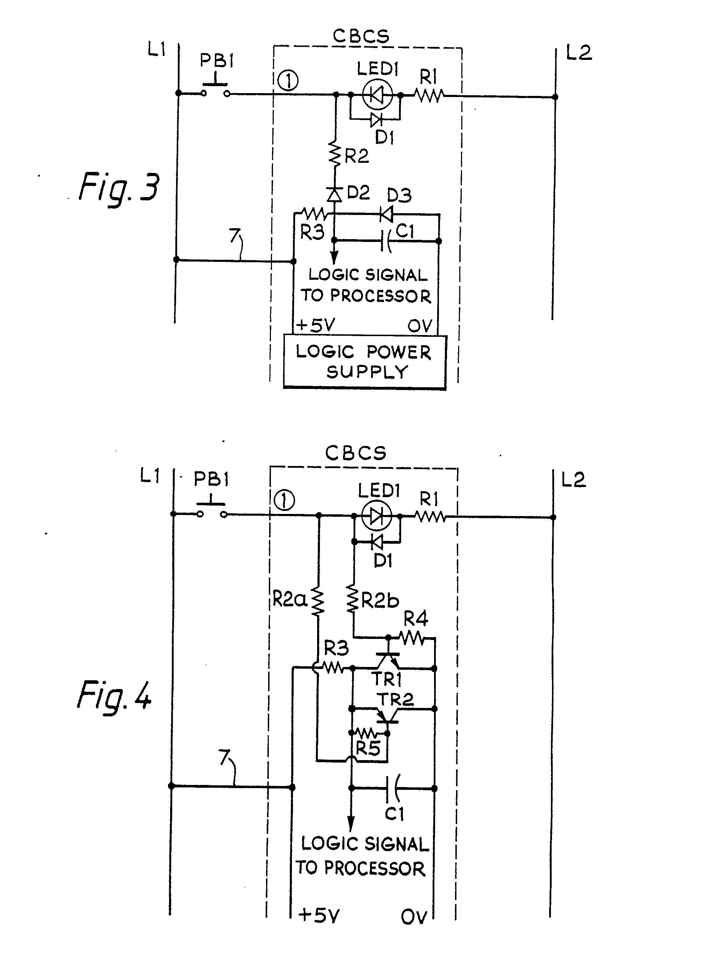

With this background, practical embodiments of the invention will be described, by way of example, with reference to the circuit diagrams of Figs. 3, 4 and 5.

Fig. 3 shows a half-wave input circuit, i.e. when PB1 opens the logic signal to the processor does not start to change from the logic '1' to a logic '0' until L2 is positive with respect to L1. It will be noted that the logic power supply is tied to L1 by line 7. R1 has a value which provides 90% of the supply voltage across PB1 contacts, also a current which makes the circuit immune from leakage currents across PB1 contacts which can arise from contamination or coupling between external wiring connected or adjacent to PB1. LED1 provides indication when PB1 is closed, D1 provides LED1 with reverse breakdown protection. R2 has a value 1OR1 and limits the current into the logic circuit as well as allowing most of the voltages L1—L2 to appear across PB1 when its contacts are open. This is desirable to breakdown oxide and/or contamination films on PB1 contacts. D2 provides half-wave rectification. D3 is a clamping diode to prevent the logic signal in the '0' state becoming more than −0.7V with respect to the logic 0V supply. R3 is a pull-up resistor which provides a logic '1' signal when PB1 is closed. C1 provides noise immunity and filtering when PB1 is open and L2 is negative with respect to L1.

Fig. 4 shows another input circuit which is a full-wave circuit, i.e. when PB1 opens the logic signal to the processor does not start to change from a logic '1' to a logic '0' until L2 is positive or negative with respect to L1. R1, LED1, D1, R3, C1, have the same function as in Figure 3. R2 a and b are effectively in parallel and their combined impedance is 1OR1. With PB1 open when L2 is positive with respect to L1 current flows through R1, D1, R2b, TR1 base emitter and R4. TR1 saturates and provides a logic '0' signal. When L2 is negative with respect to L1 current flows through R1, LED1, R2a, TR2 base emitter and R5.

TR2 saturates and provides a logic '0' signal. When PB1 is closed TR1 and TR2 are off and R3 provides a logice '1' signal to the processor.

These input circuits produce a logic '1' signal when the input switch is closed. The circuits can be inverted to provide logic '0' signals when the input switch is closed. It will be apparent to those skilled in the art that an operational amplifier can be used to provide the high impedance input, rectifying and filtering to produce a logic signal in a similar manner. It would also be possible to use an operational amplifier to sample the voltage at the junction of PB1 and LED1 at given points in the L1 waveform.

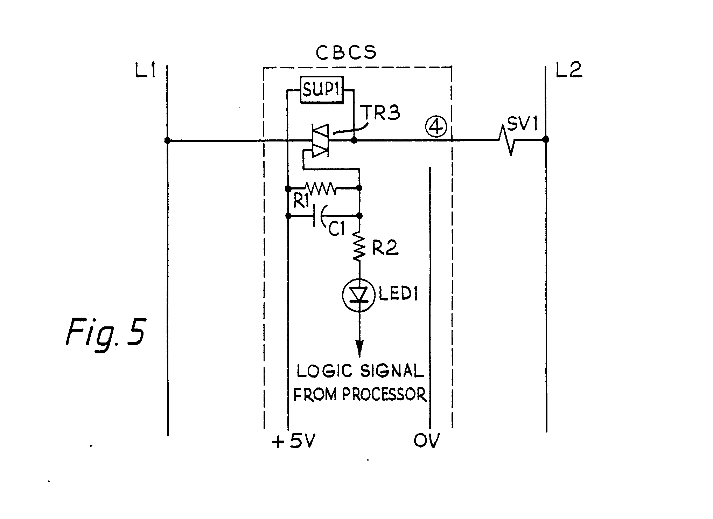

Fig. 5 shows an example of a practical output circuit. This circuit will energise the output solenoid valve coil SV1 when the logic signal is at '0'. Current will flow from +5V through triac TR3 gate, R2 and LED1 the latter providing indication of the 'ON' state. R1, C1, SUP1 provide electrical noise suppression. The output will be de-energised when the logic signal is at '1' i.e. near +5V where R1, R2 and LED1 inhibit TR1 gate current.

Normally the +5V supply is regulated to ±5% for the processor logic and current obtained from such a supply is more expensive than an unregulated source. The circuits shown in Figures 3, 4 and 5 can be designed to operate from an unregulated +5V source; this is particularly beneficial in Figure 5 where the triac gate firing current is typically 60mA per output circuit.

**Claims**

1. A programmable control system for use with a mains power supply having line (L1) and neutral (L2) inputs; the system comprising at least one control input switch element (PB1), a digital logic system (CBCS), and at least one control output switch element (TR1, SV1); the logic system (CBCS) including a power supply arranged to provide an internal voltage;

characterised in that:

the internal voltage is tied by a connection (7) to the mains line input;

each control switching element (PB1) is connected to the mains line input (L1) and via a series first impedance (R1) to the mains neutral input (L2);

the condition of each control switching element (PB1) is communicated to the logic system (CBCS) via a second impedance (R2) connected to the junction of the control switching element (PB1) and the first impedance (R1);

the second impedance (R2) is substantially greater than the first impedance (R1); and

each control output comprises a solid-state switch (TR1) and a coil (SV1) connected in series across the main power supply (L1, L2), the solid-state switch (TR3) being connected to the mains line input (L1) and the coil (SV1) to the mains neutral input (L2), the solid-state switch (TR1) having a control electrode connected to the logic system.

2. A programmable control system according to claim 1, wherein the second impedance (R2) is connected in series with rectifying means (D2) and filter means (C1).

**Patentansprüche**

1. Programmierbares Steuersystem zur Verwendung an einem Stromnetz mit einem Phasen- (L1) und mit einem Nullleiternetzanschluß (L2);

mit wenigstens einem Eingangs-Steuerschaltelement (PB1), einem digitalen Logiksystem (CBCS), und wenigstens einem Ausgangs-Steuerschaltelement (TR1, SV1);

sowie mit einer in dem Logiksystem (CBCS) enthaltenen Stromversorgung, die dazu dient, eine interne Spanning zu erzeugen;

dadurch gekennzeichnet,

daß die interne Spanning über eine Verbindung (7) an den Phasenleiternetzanschluß angeschlossen ist;

daß jedes Steuerschaltelement (PB1) mit dem Phasenleiternetzanschluß (L1) und durch eine in Reihe geschaltete erste Impedanz (R1) mit dem Nulleiternetzanschluß (L2) verbunden ist;

daß der Zustand jedes Steuerschaltelementes (PB1) an das Logiksystem (CBCS) mittels einer an die Verbindung zwischen dem Steuerschaltelement (PB1) und der ersten Impedanz (R1) angeschlossenen zweiten Impedanz (R2) übermittelt wird;

daß die zweite Impedanz (R2) wesentlich größer ist als die erste Impedanz (R1); und

daß jeder Steuerausgang einen Halbleiterschalter (TR1) und eine Spule (SV1) aufweist, die in Reihe geschaltet an das Stromnetz (L1, L2) angeschlossen sind,

wobei der Halbleiterschalter (TR3) mit dem Phasenleiternetzanschluß (L1) sowie die Spule (SV1) mit dem Nulleiternetzanschluß (L2) verbunden ist und der Halbleiterschalter (TR1) eine mit dem Logiksystem verbundene Steuerelektrode aufweist.

2. Programmierbares Steuersystem nach Anspruch 1, bei dem die zweite Impedanz (R2) mit Gleichrichtmitteln (D2) und Filtermitteln (C1) in Reihe geschaltet ist.

**Revendications**

1. Circuit de commande programmable utilisable avec une alimentation par un réseau de distribution comportant une entrée de phase (L1) et une entrée de neutre (L2); le système comprenant au moins un élément de contact d'entrée de commande (PB1), un système logique numérique (CBCS) et au moins un élément de contact de sortie de commande (TR1, SV1), le système logique (CBCS) comportant une alimentation prévue pour fournir une tension interne;

caractérisé en ce que:

la tension interne est liée par une connexion (7) à l'entrée de phase de distribution;

chaque élément de contact de commande (PB1) est raccordé à l'entrée de phase de distribution (L1) et, par l'intermédiaire d'une première impédance en série (R1), à l'entrée de neutre de distribution (L2);

l'état de chaque élément de contact de commande (PB1) est communiqué au système logique (CBCS) par l'intermédiaire d'une deuxième impédance (R2), raccordée à la jonction de l'élément de contact de commande (PB1) et de la première impédance (R1);

la deuxième impédance (R2) est sensiblement plus grande que la première impédance (R1); et

chaque sortie de commande comprend un commutateur à semi-conducteurs (TR3) et une bobine (SV1) connectés en série entre les lignes d'alimentation du réseau de distribution (L1, L2), le commutateur à semi-conducteurs (TR3) étant raccordé à l'entrée de phase de distribution (L1) et la bobine (SV1) étant raccordée à l'entrée de neutre de distribution (L2) le commutateur à semi-conducteurs (TR3) comportant une électrode de commande raccordée au système logique.

2. Système de commande programmable suivant la revendication 1, dans lequel la deuxième impédance (R2) est raccordée en série avec des moyens de redressement (D2) et des moyens de filtrage (C1).

Fig.1

Fig. 2

0 102 981

Fig. 3

Fig. 4

2

Fig.5